# EUROPEAN PATENT SPECIFICATION

(11) **EP 3 931 377 B1**
(45) Date of publication and mention of the grant of the patent: **01.10.2025**
(21) Application number: 20709678.5
(22) Date of filing: 27.02.2020
(51) Int. Cl.: D01D 5/00, D01F 1/09, D01D 5/24, D01D 5/20, D01D 5/30, B33Y 80/00, B29C 49/00, B33Y 70/10

(54) **LONGITUDINALLY NON-UNIFORM PREFORM AND METHOD OF MAKING THE SAME**
LÄNGSUNEINHEITLICHE VORFORM UND VERFAHREN ZU IHRER HERSTELLUNG
PRÉFORME NON UNIFORME LONGITUDINALEMENT ET SON PROCÉDÉ DE FABRICATION

(30) Priority: 28.02.2019 GB 201902736
(43) Date of publication of application: 05.01.2022
(73) Proprietor: IP2IPO Innovations Limited, London N1C 4AG (GB)
(72) Inventor: TEMELKURAN, Burak, South Kensington London SW7 2AZ (GB); ABDELAZIZ, Mohamed E M K, South Kensington London SW7 2AZ (GB); YANG, Guang-Zhong, South Kensington London SW7 2AZ (GB)
(74) Representative: Potter Clarkson
(86) International application number: PCT/GB2020/050472
(87) International publication number: WO 2020/174246

(56) References cited:
- EP-A1- 3 075 888
- EP-A2- 0 150 778
- WO-A1-01/42835
- JP-A- 2011 051 820
- US-A1- 2016 281 267
- US-A1- 2019 024 265

## Description

The present application relates generally to the structure of preforms for drawings fibres therefrom and corresponding methods for making said preforms. More specifically, the present application relates to preforms having a non-uniform structure in the longitudinal direction and methods of making the same.

Preforms described here are blocks of material, often polymer material, from which fibres can be drawn. It will be appreciated, however, that in other examples, the preform may be formed, at least in part, from a glass material. Preforms have a larger transverse cross-sectional area than the fibres which are drawn from them and the resultant fibre which can be drawn from a single preform can be, for example, one thousand times longer than the original preform. During the drawing of a fibre from a preform, the structure shrinks in the transverse direction of the preform and is elongated in the longitudinal direction. As such, the precise structure of the preform in terms of its composition, its shape, its size and any other features has a significant impact on the resulting fibres.

A preform generally comprises a substantially cylindrical structure, although a preform may comprise a different shape. A longitudinal direction, or longitudinal axis, can be defined as running through the length of the preform in the direction along which a fibre would be drawn. A radial direction can be defined as extending radially outwards from, and perpendicular to, the longitudinal axis.

US 2016/0281267 A1 discloses A thermoplastic filament comprising multiple polymers of differing flow temperatures in a regular geometric arrangement, and a method for producing such a filament from a preform.

JP 2011051820 A discloses a method of manufacturing an optical fibre including a preform manufacturing process and a drawing process wherein the resulting optical fibre can have a complicated cross-sectional structure.

WO 01/42835 A1 discloses an optical fibre which includes a central core glass region with a first refractive index profile. Also disclosed is a preform that can be drawn into the above fibre and a method of making said preform.

According to a first aspect of the present invention, there is provided a preform for drawing steerable fibres therefrom, the preform formed of at least a first material and having a non-uniform structure in the longitudinal direction wherein:
the first material is a polymer material;
the preform comprises one or more hollow portions arranged in the preform such that the preform is non-uniform in the longitudinal direction;
the one or more hollow portions each comprise a through hole, a recess, a change in diameter or a void within the preform;
the structure of the preform comprises a plurality of repeating unit cells along its longitudinal length;
each unit cell of the plurality of unit cells is non-uniform along its longitudinal direction; and
a fibre drawn from the preform comprises at least one steerable portion, which portion is steerable by virtue of its constituent materials providing for suitable flexibility and/or having a means for steering of the fibre.

A preform according to the first aspect of the invention may be particularly advantageous, as the fibres resultant from drawing such a preform will have a corresponding non-uniform structure in their respective longitudinal axes. A range of fibres having different beneficial applications may be produced from preforms having different types of non-uniform structure. Providing a preform having a structure according to the first aspect of the invention may reduce the number or complexity of post processing steps which need to be performed on resultant fibres drawn from the preform. Preforms according to the first aspect of the invention may also assist in manufacturing fibres which may be challenging or impossible to form in any other way due to the dimensional constraints and difficulties in working on drawn fibres.

It will be appreciated that a 'non-uniform structure in the longitudinal direction' defines any preform which varies along its longitudinal direction either by way of its constituent materials or by way of its structure in terms of its external or internal shape. The features which provide for the non-uniform structure in the longitudinal direction may provide for an axial asymmetric preform with regard to the longitudinal axis.

In one or more embodiments, the preform may comprise a second material and the arrangement of the first material and the second material may provide for the non-uniform structure of the preform in the longitudinal direction. A first material property of the first material and the corresponding first material property of the second material may be different. For example, the second material may comprise a greater flexibility than the first material. The varying material properties of the fibres resultant from the preform may provide for particularly advantageous devices by virtue of the varying material properties of the fibre along its length.

The one or more hollow portions along the length of resultant fibres may provide for localised areas of increased flexibility along the length of the fibres.

In one or more embodiments, the one or more hollow portions either may be enclosed within the preform or may at least partially extend to at least one surface of the preform. A hollow portion which is enclosed entirely by the preform may be advantageous, as it may provide a space in which a fluid such as air, another gas or a liquid is trapped within the preform and, thereby, any resultant fibres. A hollow portion which extends to only one surface of the preform may allow for the introduction and retention of fluids or other materials into the preform after forming the preform or resultant fibre after drawing the fibre. In some embodiments, the preform may comprise a hollow portion which extends to only one surface of the preform in order to allow for the introduction of a fluid or other material therein with a view to sealing the hollow potion after introduction of said fluid or other material. It will be appreciated that, where a hollow portion is located at an edge of the preform other than an end surface of the preform, the hollow portion will be elongated significantly upon drawing of the preform into a fibre. In one or more embodiments, the preform may comprise a channel having an opening located at a first surface on the preform, the channel extending through the preform to at least a second opening located at a second surface on the preform. A hollow portion which extends to two or more surfaces of the preform may allow for the introduction of a material, such as a fluid, into the preform or resultant fibre and for its expulsion from a second surface of the preform. Such an arrangement may be useful for producing fibres which can be used for drug delivery from one end of a fibre to another, for example, or for even distribution of a fluid from one aperture to a plurality of other apertures in a fibre.

In one or more embodiments, at least one of the hollow portions may comprise a helical channel. In one or more embodiments, the second material may be helically arranged within the first material. It will be appreciated that a helically arranged hollow portion may be particularly advantageous for introducing tendons therethrough. In one example, a fibre may comprise a first hollow portion extending longitudinally through the fibre from a first end to a second opposing end of the fibre. The fibre may further comprise a second hollow portion also extending longitudinally through the fibre from the first end to the second opposing end of the fibre. If the first and second hollow portions are arranged to extend straight through the fibre, then when the fibre is bent, one hollow portion may become extended in length while the second hollow portion becomes contracted due to the bend. Such an extension and contraction would also impact any tendons which may run through the hollow portions, which may cause increased tension on one tendon resulting in unintended bending at the tip to compensate for the length change or even damage to the tendons. In contrast, where the hollow portions are helically arranged within the fibre, bending of the fibre may not result in undesirable path length changes, which may serve to prevent unintended pull of tendons or damage to tendons arranged therethrough.

In one or more embodiments, at least one of the hollow portions may comprise a channel arranged as a closed loop. A hollow closed loop may be particularly advantageous, as any gas that is trapped or injected inside may circulate within the preform or the resultant fibre. This may provide for advantageous cooling in a resultant fibre. Alternatively, a liquid may be trapped inside during manufacture of the preform or may be injected into the preform post-manufacture. In one or more embodiments, a liquid material, such as water or a liquid metal, may be 3D printed into the preform.

Providing for a flexible, steerable portion of a fibre device may be particularly beneficial for devices such as flexible scopes, guidewires for a catheter or a steerable catheter.

In one or more embodiments, the radial width of the preform varies along the longitudinal direction. By means of the invention, such a preform may be drawn to provide a fibre having varying diameter. This may advantageously allow a larger diameter section of the fibre to be provided at a proximal end of a device formed by the fibre. The proximal end may in turn have larger features at the cross-section, as the features in cross-section scale with outer diameter. Larger features (such as metals or channels) may be easier to connect to than smaller features which are required elsewhere in the device, such as at a distal end. For example, a fibre device of 1 mm outer diameter (for access to narrow lumens) may have channels of 0.1 mm. If a user of the device wanted to connect to this channel, the user would need to use pipes with a 0.1 mm outer diameter to fit into this channel. However, by means of the invention a fibre may be drawn with a larger proximal end, with a 5 mm outer diameter for example. The channels may therefore have a diameter of 0.5 mm which is much larger and easier to connect other devices to.

In one or more embodiments, one of the first and second materials may comprise a magnetic material. This may be particularly advantageous, as the non-uniform distribution of a magnetic material within a fibre may allow for the magnetic manipulation of selected parts of the preform or a resultant fibre. In one or more embodiments, the preform may comprise periodically arranged magnetic material. When drawn into a fibre, the resultant fibre may be separated into a plurality of fibre devices, each fibre device comprising a single piece of magnetic material. The movement of such a fibre may be manipulated using a magnetic field which moves only the magnetic portion of the fibre, while leaving the rest unaffected. This may provide for a magnetically steerable fibre.

In one or more embodiments, the second material may comprise a greater flexibility than the first material. This may be particularly advantageous, as the preform or any resultant fibre may be designed to have increased flexibility at certain positions along its length and a reduced flexibility along other positions along its length. Alternatively, the second material may comprise a greater stiffness than the first material.

In one or more embodiments, the preform may further comprise a third material different to the first and second materials, wherein the arrangement of the first, second and third materials is such that the preform comprises a non-uniform structure along the longitudinal direction. It will be appreciated that any of the options disclosed above in relation to a second material may also relate to the third material. It will further be appreciated that the preform may comprise a fourth, fifth or more different materials. The preform may comprise one or more different materials in addition to one or more hollow portions.

In one or more embodiments, the first, second or third materials may comprise one of: a stiffness tuneable material (such as shape memory polymers), ferromagnetic polymers, polycarbonate; poly (methyl methacrylate) (PMMA); polyetherimide; cyclic olefin copolymer (COC); poly(styrene-block-butadiene-block-styrene) (SEBS); cyclic olefin copolymer elastomer (COC-E) or polysulfone. It will be appreciated that the foregoing specific example materials are for illustrative purposes only and that other thermoplastic polymers or glass materials, such as chalcogenide glass or silica glass, for example, may be suitable. The first, second or third material may be loaded with one or more conducting materials, such as: carbon; carbon nanotubes; graphene; or silver nanowires (or combinations) will make the polymer conductive.

In one or more embodiments, the preform is a 3D printed preform. A preform of the first aspect of the invention formed by 3D printing may be particularly advantageous as, in order to provide resultant fibres with longitudinally non-uniform structures, the need for post-processing steps to be made to the resulting fibre is reduced or eliminated and nor do additional processing steps need to be performed after drawing of the fibres. This may reduce not only the number of processing steps needed to fabricate the fibre device but may also allow the manufacturing of devices which may be challenging or impossible to do any other way. Forming the preform by 3D printing may also reduce the costs associated with preform and resultant fibre manufacture.

The structure of the preform comprises a plurality of repeating patterns, which we can refer to as unit cells, along its longitudinal length. In one or more embodiments a single unit cell, i.e., a single repeating unit, may provide for more than one fibre device when drawn into a fibre and subsequently separated into a plurality of fibre devices. By providing a preform having a plurality of repeating unit cells, a resultant fibre drawn from the preform would also comprise a plurality of unit cells along its longitudinal length. One or more than one of the unit cells in combination may provide for individual fibre devices. A fibre drawn from a preform comprising a plurality of repeating unit cells along its length may be cut or otherwise severed into a plurality of individual fibre devices, each fibre device comprising one or more of the unit cells, or part of a unit cell. This may provide a particularly simple and inexpensive manner of forming a plurality of fibre devices. Each unit cell in the plurality of unit cells is non-uniform along its longitudinal direction.

According to a second aspect of the invention, there is provided a method of printing a preform for drawing steerable fibres therefrom, the method comprising the steps of: forming a preform from at least a first material such that one or more hollow portions are formed into the preform, wherein:
the first material is a polymer material;
the one or more hollow portions provide for a non-uniform structure of the preform in the longitudinal direction;
the one or more hollow portions each comprise a through hole, a recess, a change in diameter or a void within the preform;
the step of forming the preform comprises forming a preform comprising a plurality of repeating unit cells along the longitudinal length of the preform, each unit cell of the plurality of unit cells being non-uniform along its longitudinal direction; and
the step of forming the preform comprises forming the preform to be drawable to a fibre comprising at least one steerable portion, which portion is steerable by virtue of its constituent materials providing for suitable flexibility and/or having a means for steering of the fibre.

Forming a preform by the method of the second aspect of the invention may be particularly advantageous, as the fibres resultant from drawing such a preform will have a corresponding non-uniform structure in their respective longitudinal axes. A range of fibres having different beneficial applications may be produced from a preform manufactured using the above method.

In one or more embodiments, the method may further comprise forming the preform from a second material such that the arrangement of the first and second materials provides for the non-uniform structure of the preform in the longitudinal direction.

In one or more embodiments, the step of forming the preform may comprise: providing a printing surface; and printing the preform on the printing surface by depositing the at least first material such that the preform comprises a non-uniform structure in the longitudinal direction.

The method of printing the preform by depositing a first material may be particularly advantageous, because it may allow for accurate control of the manufacture process and allows for the production of a preform which is non-uniform in the longitudinal direction. Forming the preform according to the method may also be advantageous because, in order to provide resultant fibres with longitudinally non-uniform structures, the need for post-processing steps to be made to the preform is reduced or eliminated and no or fewer additional materials or devices need to be introduced during drawing of the fibres.

In one or more embodiments, the non-uniform structure may result from depositing a second material different from the first material during the printing of the preform such that the arrangement of the first and second materials provides for the non-uniform structure of the preform in the longitudinal direction. A first material property of the first material and the corresponding first material property of the second material may be different. For example, the second material may comprise a greater flexibility or elasticity than the first material. The varying material properties of the fibres resultant from the preform may provide for particularly advantageous devices by virtue of the varying material properties of the fibre along its length.

In one or more embodiments, the preform may be printed such that one or more hollow portions are formed into the preform, wherein one or more hollow portions provide for the non-uniform structure of the preform in the longitudinal direction. This may be particularly advantageous, as hollow portions along the length of resultant fibres may provide for localised areas of increased flexibility along the length of the fibres.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

One or more embodiments will now be described by way of example only with reference to the accompanying drawings in which:
Figure 1 is a schematic representation of a preform according to an embodiment of the invention having a non-uniform structure in the longitudinal direction;
Figure 2 is a schematic representation of at least a portion of a fibre according to an embodiment of the invention drawn from the preform of figure 1;
Figure 3 is a schematic representation of a preform according to an embodiment of the invention having a non-uniform structure in the longitudinal direction;
Figure 4 is a schematic representation of a preform according to an embodiment of the invention having a non-uniform structure in the longitudinal direction;
Figure 5 is a schematic representation of a preform according to an embodiment of the invention having a non-uniform structure in the longitudinal direction;
Figure 6a is a schematic representation of a preform according to an embodiment of the invention having a non-uniform structure in the longitudinal direction;
Figure 6b is a sectioned schematic representation of the preform shown in figure 6a;
Figure 7 is a cross-sectional schematic representation of a unit cell (comprising half of a repeating pattern) of a preform according to an embodiment of the invention having a non-uniform structure in the longitudinal direction;
Figure 8 is a cross-sectional schematic representation of a unit cell of a fibre according to an embodiment of the invention drawn from a preform of figure 7;
Figure 9 is a sectioned schematic representation of a unit cell of the fibre of figure 8;
Figure 10 is a schematic representation of a flexible fibre according to an embodiment of the invention drawn from a preform having a non-uniform structure in the longitudinal direction;
Figure 11 is a schematic representation of a unit cell of a preform according to an embodiment of the invention having a non-uniform structure in the longitudinal direction comprising channels or a second material;
Figure 12 is a schematic representation of a unit cell of a preform according to an embodiment of the invention having a non-uniform structure in the longitudinal direction comprising connected channels; and
Figure 13 shows a method of printing a preform according to an embodiment of the invention.

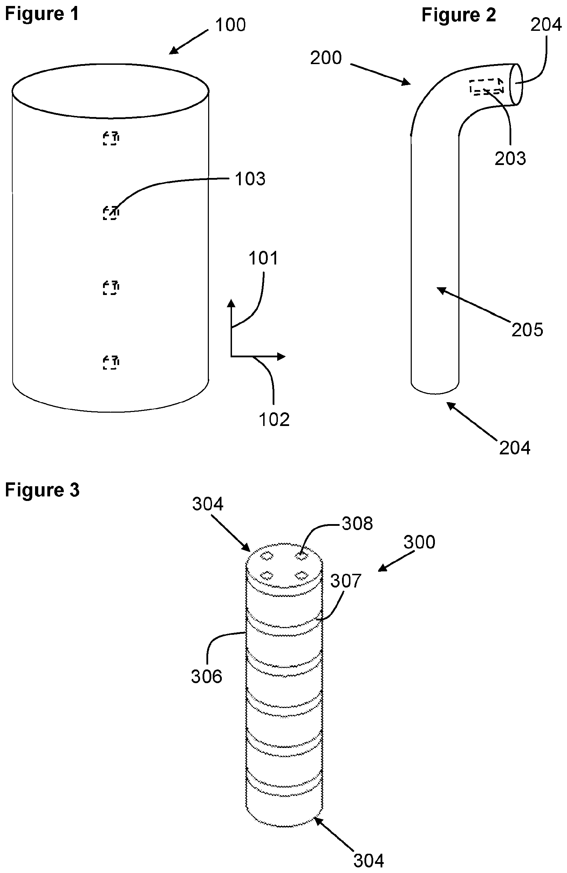

As shown in figure 1, a preform 100 according to an embodiment of the invention comprising a first material may have a cylindrical structure having a longitudinal direction 101 extending along the length of the preform 100 and a radial direction 102 extending radially outwards from the centre of the preform 100. The preform 100 may comprise one or more features 103 which render the preform 100 non-uniform in the longitudinal direction 101. The features 103 are shown in dotted lines in figure 1 in order to highlight that the features 103 are embedded within the bulk of the first material of the preform 100.

Non-uniform is used herein to describe that the structure or composition of the preform is non-constant. Non-uniformity of a preform in the longitudinal direction is characterised by a variation in the materials used to form the preform or the structure of the preform in the longitudinal direction, such as the inclusion of hollow portions inside or outside the preform, including variations in the internal or external dimensions of the preform. By way of example, a through-hole of constant cross-section extending in the longitudinal directional through the preform may provide for a preform which is uniform in the longitudinal direction. Conversely, a through-hole extending in the longitudinal direction with a varying cross-section would provide a non-uniform structure for the preform in the longitudinal direction.

In one embodiment, the preform 100 may comprise a second material which provides the one or more features 103. As shown in the embodiment of figure 1, the second material is arranged periodically throughout the preform 100. By arranging the second material periodically, a plurality of unit cells may be formed wherein each unit cell in the preform 100 comprises a single feature 103 in this case formed of the second material. Thus, the preform may comprise a plurality of unit cells where one or more or each of the unit cells comprises a non-uniform structure in the longitudinal direction. In some embodiments, such as the embodiment of figure 1, the features which provide for non-uniformity of the preform may result in the preform, or each unit cell of the preforming, being axially asymmetric with respect to the longitudinal axis. This may be particularly advantageous for forming a fibre which can be separated into a plurality of steerable fibre devices which do not require post-processing to incorporate desirable properties.

Moving now to figure 2, a fibre 200 drawn from a preform 100 has a smaller diameter than the preform 100 and a significantly longer length in the longitudinal direction. The fibre 200 of figure 2 is not drawn to scale in comparison with the preform 100 of figure 1 and represents only a single portion, a strand, of the full fibre drawn from the preform. The strand, which may correspond to a portion of, one, or more unit cells may provide a fibre device. The elongation of the preform in forming a fibre 200 also results in an elongation of any of features 103, 203 formed within the preform 200. Thus, by way of example, a cubic feature 103 in a preform 100 could become a rectangular cuboid feature 203 when drawn into a fibre 200.

The second material may comprise one of a shape memory polymer, a ferromagnetic polymer, polycarbonate or polysulfone. The second material may be any polymer loaded with magnetic material which is suitable for drawing into a fibre 200.

Providing a magnetic material within the preform 100 may be particularly advantageous for producing fibres 200 having magnetic portions. A fibre 200 comprising a magnetic feature 203 may provide for a fibre 200 wherein the magnetic features are steerable. A resultant fibre 200 may provide a fibre device which can be steered by using magnetic field variations to move the magnetic features 203 of the fibre device. Such a magnetic fibre device may comprise one or more magnetic features 203 therein to allow for one end 204 of the fibre to be manipulated by magnetic fields. This may provide for an axially asymmetric fibre device. Alternatively, both ends 204 of the fibre device may comprise one or more magnetic features 203 to allow for steering of both ends of the fibre device. Alternatively, or in addition, one or more intermediate segments 205 may comprise magnetic features in order to allow the fibre device to be manipulated by magnetic fields.

As shown in figure 3, an alternative embodiment of a preform 300 may be provided wherein the preform 300 comprises periodic alternating segments of a first material 306 and a second material 307, thereby providing a non-uniform structure in the longitudinal direction. In this embodiment, each unit cell of the preform is axially asymmetric with respect to the longitudinal axis. In some embodiments, the segments 306, 307 may be cross-sectional volumes of the preform formed entirely of either the first material or the second material. In other embodiments, one or both periodic cross-sectional segments 306, 307 may comprise one or more mixtures of the first and second materials. Periodic segments of the second material 307 may comprise a greater flexibility than the segments 306 formed of the first material. As such, resultant fibres may comprise alternating segments 306, 307 with different flexibilities. This may provide for a fibre device which comprises sections which can bend to be manipulated for moving the fibre around but also comprising stiffer portions for structural integrity. If the flexible portions are arranged at one end of each resultant fibre, then a device may be provided with a stiff body and a flexible end portion. This may be particularly advantageous when combined with providing a magnetic feature within a flexible end portion such that a device may comprise a stiff body and a manipulatable flexible end. In such an embodiment, the second material may comprise a flexible material and a third magnetic material may be encapsulated or otherwise integrated with the second material.

A preform, such as that shown in figure 3, may further comprise one or more hollow portions 308 which provide openings into the preform 300. An opening may comprise a hollow portion 308 which extends part-way through the preform 300, such as from an edge of the preform 300 to a predefined depth within the preform 300. Alternatively, one or more hollow portions 308 may comprise one or more through-holes which extends from a first surface of the preform 300 to a second surface of the preform. The through-hole of this embodiment extends longitudinally from a first end 304 of the preform 300 to a second end 304 of the preform 300. Alternatively, a through-hole may extend from a first a position on any surface 300 of the preform to one or more positions on a surface of the preform 300.

In one or more embodiments, tendons may be arranged to extend through one or more through-holes 308 of the preform 300 so that resultant fibres can be manipulated by the manipulation of the tendons in order to provide steerability. These tendons may be made of materials such as silica fibres, Dyneema^{®}, Nylon 6 monofilaments or nitinol wires. These tendons may be fed into the fibre through the preform during drawing of the fibre therefrom, or may be inserted in to the drawn fibre after draw.

A typical preform may comprise a cylinder of a single uniformly arranged material. It will be appreciated that a hollow portion may describe any lack of material, whether by formation of the preform in a non-standard configuration or by removal of material after formation of the preform, which deviates from a preform of uniform shape and constitution. Thus, a hollow portion may describe a hole, a through-hole, a recess, a circumferential change in diameter or a void within the preform body.

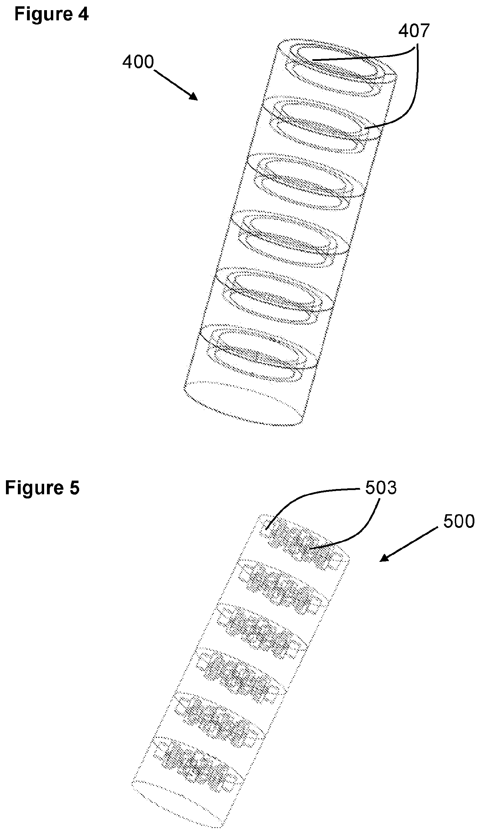

As shown in figure 4, the second material is arranged as an annulus 407 formed within the preform 400. A plurality of annuli 407 may be arranged periodically through the preform 400, or the preform 400 may comprise a single annulus 407 formed of a second material. Within the annulus 407 may be a further portion of the first material, a different third material, or a hollow portion. The amount of the second material arranged within the first material may be varied by varying the thickness, diameter or depth of the annulus.

As shown in figure 5, the preform 500 comprises a plurality of features 503. One or more of the plurality of features 503 may comprise the second material, a third material or a hollow portion. The properties of the preform 500 and resultant fibres may be varied by varying one or more of the number or volume of features 503, the shape of the features 503 and the constituents of the features 503. It will be appreciated that, while the features 503 are shown in figure 5 as being generally cylindrical in shape, these may alternatively comprise any shape.

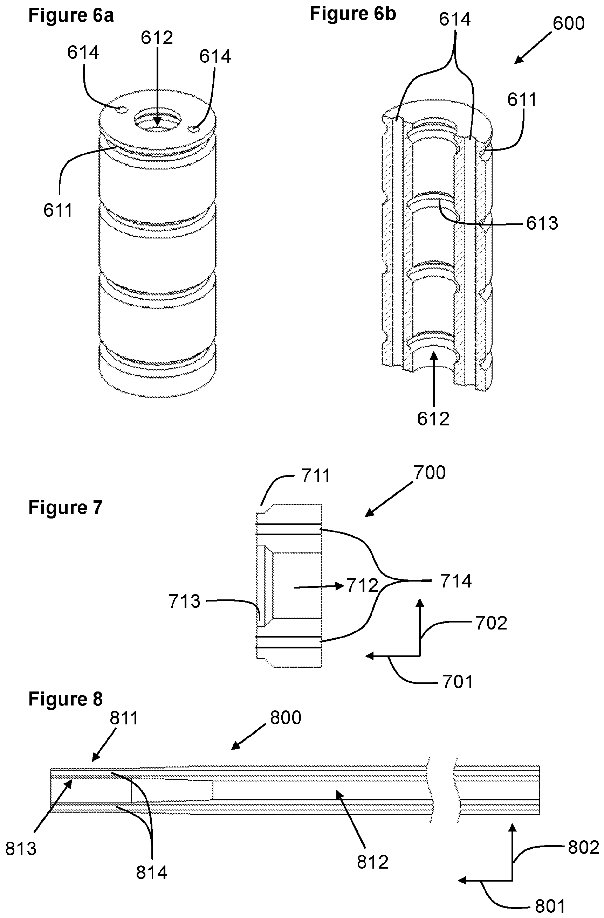

As shown in figures 6a and 6b, the preform 600 is formed such that one or more hollow portions 611 extend around the circumference of the preform 600 such that the diameter of the preform 600 varies along its longitudinal length. The preform 600 of this embodiment comprises a central through-hole 612 extending through the preform 600 in the longitudinal direction. Further inner hollow portions 613 may result in the diameter of the central through-hole 612 varying along its longitudinal length. The inner hollow portions 613 of the central through-hole 612 are co-located along the longitudinal direction with the hollow portions 611 which vary the outer diameter of the preform 600. By providing one or more of the hollow portions 611, 613 on one or both of the outer surface of the preform and around the central through-hole 612, the flexibility of resultant fibres may be increased at the longitudinal location of the hollow portions 611, 613 when compared to portions along the longitudinal length of the resultant fibre without the hollow portions.

In the embodiment of figure 6, further through-holes 614 are arranged along the longitudinal length of the preform 600 around the central through-hole 612. These further through-holes 614 may be used for arranging tendons therein which may be used to manipulate the resultant fibres, thereby providing for a steerable fibre device.

As shown in figure 7, the preform may be arranged as an axially asymmetric single unit cell of preform in figure 6 and 6b. By considering a single unit cell, it is easier to consider the structure of the resultant fibre, as will be discussed in relation to figures 8, 9 and 10, which show a fibre resulting from the preform of figure 7. In the example of figure 7, the longitudinal direction 701 is in the horizontal direction and the radial direction 702 is in the vertical direction. In another embodiment, the preform represented by figure 7 may provide for half a unit cell. The full unit cell may comprise the preform of figure 7 and a mirror image of the preform connected at either end.

The preform 700 of figure 7 comprises a first hollow portion 711 around the outer circumference of the preform 700 resulting in a variation in the preform's outer diameter. While the narrowing of the diameter of the preform 700 is shown as tapered in figure 7, narrowing may be one or a combination of tapered and abrupt. A second hollow portion forms a central through-hole 712 in the preform 700. The central through-hole may be used for one or more of: providing surgical tools therethrough, such as biopsy forceps; a camera; drug delivery; radiative energy guidance; sensors; or guidewires. Alternatively, the central through hole may be used for other applications. A third hollow portion 713 extends concentrically around the central through-hole 712 such that the diameter of the central through-hole 712 increases. The third hollow portion 712 is co-located along the longitudinal direction 701 with the first hollow portion 711 such that the preform 700 only comprises a narrow wall at this point. Fourth and fifth hollow portions 714 provide further through-holes into which tendons can be inserted for the manipulation of fibres resulting from the preform 700. It will be appreciated that any number of different geometries or structures may be arranged along the length of the preform 700 or at one or both of its ends.

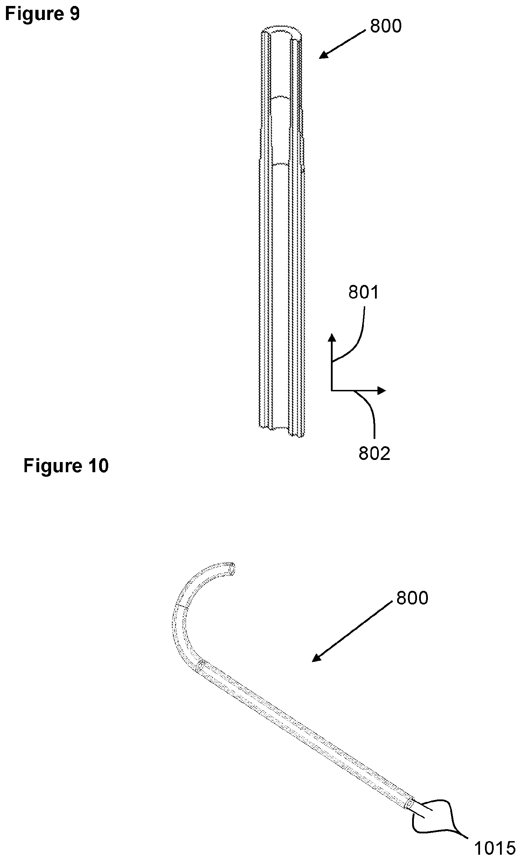

Moving now to figure 8, there is shown a cross sectional view of a fibre unit cell drawn from the preform of figure 7. Figure 9 shows a sectioned isometric view of the fibre of figure 8. In figures 8 and 9, the longitudinal axis is in the direction of arrow 801 and the radial direction is in the direction of arrow 802. The first hollow portion 811 of figure 8, corresponding to the first hollow portion 711 of figure 7 results in an extended length of the fibre 800 which tapers towards the end of one end of the fibre 800. The second hollow portion 712 of the preform is also provided as the second hollow portion 812 of the fibre 800. The third hollow portion 713 of the preform 700 is drawn into an extended hollow portion 813 of the fibre, resulting in a narrowing of the walls of the fibre towards one end. The fourth and fifth hollow portions 714 are maintained as hollow portions 814 of the fibre.

Figure 10 shows an isometric view of the fibre of figures 8 and 9. A fibre 800 resulting from the preform 700 of figure 7 becomes significantly longer in the longitudinal direction 801 and narrower in the radial direction 802 when drawn. The elongation of the features of the preform 700 in the fibre 800 may provide for a flexible end portion of the fibre compared to the end which does not have those features which can be manipulated using tendons 1015 arranged within the fourth and fifth hollow portion 814 to steer the fibre 800 as shown in figure 10.

The axially asymmetric fibre device resulting from drawing a unit cell of a preform having a non-uniform structure in the longitudinal direction may provide for a particularly advantageous steerable fibre device. In particular, having one or more features towards the end of the unit cell allows for the production of a fibre device which has a steerable tip. This may be useful in a plurality of applications, such as flexible scopes; as a steerable catheter; as a steerable microcatheter; as a steerable guidewire for a catheter or as a steerable micro-guidewire for a microcatheter.

In one or more embodiments, it may be advantageous to be able to modify the flexibility of a fibre resultant from a preform. This may be achieved by choosing a second material whose flexibility can be modified by external stimuli (i.e. a stiffness tuneable material), such as a shape memory polymer or a low point melting alloy responding to temperature changes which can switch between a stiff state and a flexible state. (This applies to structures in fig 3, 4, 5)

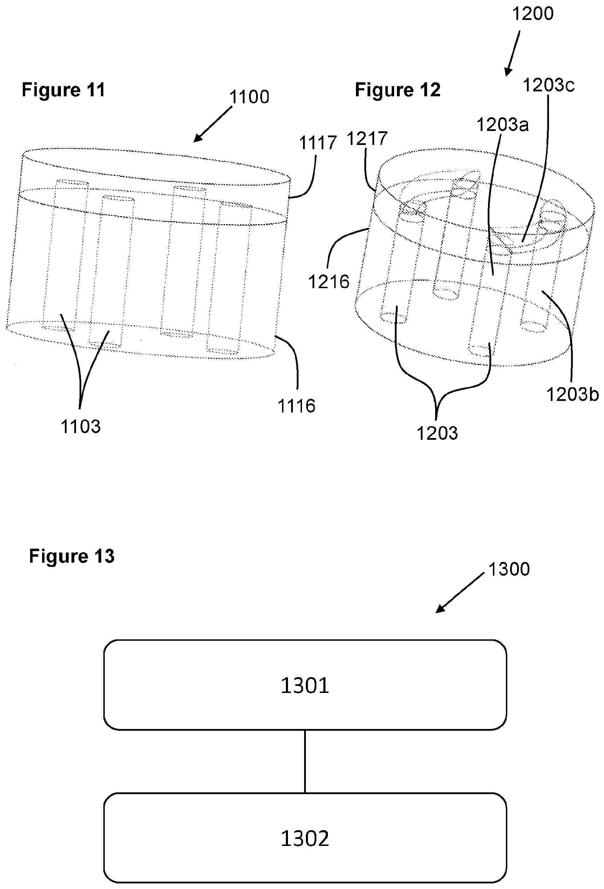

As shown in figures 11 and 12, in some embodiments, the preform 1100, 1200 may comprise a first material and a second material arranged axially asymmetrically in stacked segments 1116, 1117, 1216, 1217. The preforms 1100, 1200 of these embodiments comprise one instance of the first material segment 1116, 1216 and the second material segment 1117, 1217. In other embodiments, figures 11 and 12 may comprise one unit cell of a larger preform comprising a plurality of unit cells. The second material may comprise a material whose flexibility can be modified by external stimuli. It will be appreciated that one or more of a range of material properties of the second material may be modified by the introduction of external stimuli.

The preform 1100, 1200 may comprise one or more features 1103, 1203 which extend at least through the first material segment 1116, 1216 and terminate one of: on coming in contact with the second material segment 1117, 1217; part way through the second material segment 1117, 1217; or after extending all the way through the second material segment 1117, 1217. The one or more features 1103, 1203 may comprise hollow portions 1103 or may comprise a third material, such as an optically transparent material. In resultant fibres, where the one or more features comprise a third material, optical excitation may be used to illuminate the second material segment 1117 through the optically transparent third material 1103 in order to vary the flexibility of the second material. Alternatively, the one or more features 1203 may comprise one or more hollow portions through which a liquid may be circulated to vary the temperature of segment 1217.

In another embodiment, fluids may be circulated through the second material segment 1117, 1217 or at the surface interface between the first material segment 1116, 1216 and the second material segment 1117, 1217. As shown in figure 12, first and second hollow portions 1203a, 1203b extending through the first material 1216 and into the second material 1217 may be connected by a hollow portion 1203c which forms a connecting channel between the first and second hollow portions 1203a, 1203b. Connected hollow portions 1203a, 1203b, 1203c may allow for the circulation of fluids through the second material segment 1217. By circulating heated fluids through the hollow portions 1203 in a second material segment 1217 whose flexibility varies with temperature (such as stiffness tuneable materials), the flexibility of the second material segment 1217 may be increased. Fibres resulting from a preform 1200 such as that shown in figure 12 may be controlled to have a stiff structure until a heated fluid is circulated through the hollow portions 1203 extending through the second material segment 1217, at which point a portion of the fibre may become steerable, such as by using tendons or by the manipulation of a magnetic feature within the fibre. Or it could be soft (possibly with body temperature within body) and circulating cold water may be used to make it stiffer.

It will be appreciated that hollow portions 1203 do not need to be connected in order to allow for fluid flow therethrough. For example, a hollow portion may comprise a through-hole which extends from a first surface to a second surface of the preform 1200 for the provision of fluid therethrough.

The thermal or optical excitation of the section with second material can also be used to actuate the second material to change its shape to a predefined / precoded shape (such as in shape memory polymers), where tendons may not be needed for such arrangement to achieve movement of the distal end of device.

In some embodiments, the preform 1200 comprises a plurality of connected fluid channels 1203 formed of hollow portions extending through the first and second material segments 1216, 1217. As shown in figure 12, there may be one or two connected fluid channels 1203 or, alternatively, there may be more connected fluid channels. It will be appreciated that, in an embodiment where the second material comprises a suitable shape memory polymer, if a heated fluid is circulated through a first connected fluid channel 1103 of the fibre resultant from the preform 1200 of figure 12 and a colder fluid is circulated through the second fluid channel 1203 of the fibre, such circulation can be used to selectively actuate different sides of the second material which may have different memories coded.

It will be appreciated that a fibre formed of a preform 1200 such as that shown in figure 12 will have its connecting channel 1203 elongated along the longitudinal direction when drawn. Thus, the connecting channels 1203c may form a long and wide reservoir within the second material segment 1217. This may allow for a more significant interaction area for the fluid with the second material segment 1217 than is obvious from the preform 1200 of figure 12, thereby allowing for efficient heat transfer.

Method 1300 provides a method of forming a preform comprising the steps of: providing 1301 a printing surface; and printing 1302 the preform on the printing surface by depositing a first material such that the preform comprises a non-uniform structure in the longitudinal direction.

It will be appreciated that the preform may comprise a non-uniform structure by way of one or more additional materials being incorporated into the preform structure such that the preform is non-uniform in the longitudinal direction. Alternatively, the first material may be arranged so as to form hollow portions which result in a non-uniform structure in the longitudinal direction.

A preform formed by method 1300 may be further altered using post-processing techniques such as additional additive manufacturing techniques and/or subtractive manufacturing, such as laser or mechanical drilling techniques. Alternatively, a preform formed by the method 1300 may be joined to one or more other preforms in order to form a larger preform. This may be particularly advantageous where the final preform is comprised of a number of different materials sections or materials.

## Claims

1. A preform (100, 300, 400, 500, 600) for drawing steerable fibres (200, 800) therefrom, the preform formed of at least a first material (306) and having a non-uniform structure in the longitudinal direction wherein:
the first material is a polymer material;
the preform comprises one or more hollow portions (308, 611, 613) arranged in the preform such that the preform is non-uniform in the longitudinal direction;
the one or more hollow portions each comprise a through hole, a recess, a change in diameter or a void within the preform;
the structure of the preform comprises a plurality of repeating unit cells (700) along its longitudinal length;
each unit cell of the plurality of unit cells is non-uniform along its longitudinal direction; and
a fibre drawn from the preform comprises at least one steerable portion, which portion is steerable by virtue of its constituent materials providing for suitable flexibility and/or having a means for steering of the fibre.

2. The preform (100, 300, 400, 500, 600) of claim 1 wherein one or more of the hollow portions (308, 611, 613) either:
are enclosed by the preform; or
at least partially extend to at least one surface of the preform.

3. The preform (100, 300, 400, 500, 600) of claim 2 wherein one or more of the hollow portions (308, 611, 613) comprises:
a through-hole extending from a first surface of the preform to a second surface of the preform.

4. The preform (100, 300, 400, 500, 600) of claim 2 wherein one or more of the hollow portions (308, 611, 613) comprises a helical channel.

5. The preform (100, 300, 400, 500, 600) of any preceding claim wherein the radial width of the preform varies along the longitudinal direction.

6. The preform (100, 300, 400, 500, 600) of any preceding claim comprising a second material (307) different to the first material (306) and wherein the arrangement of the first material and the second material contributes to the non-uniform structure of the preform in the longitudinal direction.

7. The preform (100, 300, 400, 500, 600) of claim 6 wherein the second material (307) is helically arranged within the first material (306).

8. The preform (100, 300, 400, 500, 600) of claim 6 or claim 7 wherein one of the first (306) and second materials (307) comprise a magnetic material that is movable by using magnetic field variations.

9. The preform (100, 300, 400, 500, 600) of any of claims 6 - 8 wherein the preform further comprises a third material different to the first (306) or second materials (307), the arrangement of the first, second and third materials such that the preform comprises a non-uniform structure along the longitudinal direction.

10. The preform (100, 300, 400, 500, 600) of claim 9 wherein at least one of the first (306), second (307) or third materials comprises one of: a ferromagnetic polymer; polycarbonate; poly (methyl methacrylate) (PMMA); polyetherimide; cyclic olefin copolymer (COC); poly(styrene-block-butadiene-block-styrene) (SEBS); cyclic olefin copolymer elastomer (COC-E) and polysulfone.

11. The preform (100, 300, 400, 500, 600) of claim 9 wherein at least one of the first (306), second (307) or third materials comprise one of a conducting material and a polymer loaded with conducting material, wherein the conducting material comprises one or more of: carbon; carbon nanotubes; graphene; and silver nanowires.

12. The preform (100, 300, 400, 500, 600) of any preceding claim wherein the preform is a 3D printed preform.

13. A method of printing a preform (100, 300, 400, 500, 600) for drawing steerable fibres (200, 800) therefrom, the method comprising the step of:
forming a preform from at least a first material (306) such that one or more hollow portions (308, 611, 613) are formed into the preform, wherein:
the first material is a polymer material;
the one or more hollow portions provide for a non-uniform structure of the preform in the longitudinal direction;
the one or more hollow portions each comprise a through hole, a recess, a change in diameter or a void within the preform;
the step of forming the preform comprises forming a preform comprising a plurality of repeating unit cells (700) along the longitudinal length of the preform, each unit cell of the plurality of unit cells being non-uniform along its longitudinal direction; and
the step of forming the preform comprises forming the preform to be drawable to a fibre comprising at least one steerable portion, which portion is steerable by virtue of its constituent materials providing for suitable flexibility and/or having a means for steering of the fibre.

14. The method of claim 13 wherein the method further comprises forming the preform (100, 300, 400, 500, 600) from a second material (307) such that the arrangement of the first and second materials (306, 307) provides for the non-uniform structure of the preform in the longitudinal direction.

15. The method any of claims 13 - 14 wherein the step of forming the preform (100, 300, 400, 500, 600) comprises:
providing a printing surface; and
printing the preform on the printing surface by depositing the at least first material (306) such that the preform comprises a non-uniform structure in the longitudinal direction.

## Patentansprüche

1. Vorform (100, 300, 400, 500, 600) zum Ziehen lenkbarer Fasern (200, 800) daraus, wobei die Vorform aus mindestens einem ersten Material (306) besteht und in Längsrichtung eine ungleichmäßige Struktur aufweist, wobei:
das erste Material ein Polymermaterial ist;
die Vorform einen oder mehrere hohle Abschnitte (308, 611, 613) umfasst, die so in der Vorform angeordnet sind, dass die Vorform in Längsrichtung ungleichmäßig ist;
der eine oder die mehreren hohlen Abschnitte jeweils ein Durchgangsloch, eine Aussparung, eine Durchmesseränderung oder einen Hohlraum innerhalb der Vorform umfassen;
die Struktur der Vorform entlang seiner Längserstreckung eine Vielzahl sich wiederholender Elementarzellen (700) umfasst;
jede Einheitszelle der Vielzahl von Einheitszellen entlang ihrer Längsrichtung ungleichmäßig ist; und
eine aus der Vorform gezogene Faser mindestens einen lenkbaren Abschnitt umfasst, der aufgrund der Materialien, aus denen er besteht, lenkbar ist, die für eine geeignete Flexibilität sorgen und/oder über eine Einrichtung zum Lenken der Faser verfügen.

2. Vorform (100, 300, 400, 500, 600) nach Anspruch **1,** wobei einer oder mehrere der hohlen Abschnitte (308, 611, 613) entweder:
von der Vorform umschlossen sind; oder
sich zumindest teilweise bis zu mindestens einer Oberfläche der die Vorform erstrecken.

3. Vorform (100, 300, 400, 500, 600) nach Anspruch 2, wobei einer oder mehrere der hohlen Abschnitte (308, 611, 613) Folgendes umfassen:
ein Durchgangsloch, das sich von einer ersten Oberfläche der Vorform zu einer zweiten Oberfläche der Vorform erstreckt.

4. Vorform (100, 300, 400, 500, 600) nach Anspruch 2, wobei einer oder mehrere der hohlen Abschnitte (308, 611, 613) einen spiralförmigen Kanal umfassen.

5. Vorform (100, 300, 400, 500, 600) nach einem der vorhergehenden Ansprüche, wobei die radiale Breite der Vorform entlang der Längsrichtung variiert.

6. Vorform (100, 300, 400, 500, 600) nach einem der vorhergehenden Ansprüche, der ein zweites Material (307) umfasst, das sich vom ersten Material (306) unterscheidet, und wobei die Anordnung des ersten Materials und des zweiten Materials zur ungleichmäßigen Struktur der Vorform in Längsrichtung beiträgt.

7. Vorform (100, 300, 400, 500, 600) nach Anspruch 6, wobei das zweite Material (307) spiralförmig innerhalb des ersten Materials (306) angeordnet ist.

8. Vorform (100, 300, 400, 500, 600) nach Anspruch 6 oder Anspruch 7, wobei eines der ersten (306) und zweiten Materialien (307) ein magnetisches Material umfasst, das durch Verwendung von Magnetfeldschwankungen beweglich ist.

9. Vorform (100, 300, 400, 500, 600) nach einem der Ansprüche 6 bis 8, wobei die Vorform ferner ein drittes Material umfasst, das sich von dem ersten (306) oder zweiten Material (307) unterscheidet, wobei die Anordnung des ersten, zweiten und dritten Materials derart ist, dass die Vorform entlang der Längsrichtung eine ungleichmäßige Struktur umfasst.

10. Vorform (100, 300, 400, 500, 600) nach Anspruch 9, wobei mindestens eines der ersten (306), zweiten (307) oder dritten Materialien eines der folgenden umfasst: ein ferromagnetisches Polymer; Polycarbonat; Polymethylmethacrylat (PMMA); Polyetherimid; Cycloolefin-Copolymer (COC); Polystyrol-Blockbutadien-Blockstyrol (SEBS); Cycloolefin-Copolymer-Elastomer (COC-E) und Polysulfon.

11. Vorform (100, 300, 400, 500, 600) nach Anspruch 9, wobei mindestens eines der ersten (306), zweiten (307) oder dritten Materialien ein leitendes Material oder ein mit leitendem Material beladenes Polymer umfasst, wobei das leitende Material eines oder mehrere der folgenden umfasst: Kohlenstoff; Kohlenstoffnanoröhren; Graphen; und Silbernanodrähte.

12. Vorform (100, 300, 400, 500, 600) nach einem der vorhergehenden Ansprüche, wobei die Vorform eine 3D-gedruckte Vorform ist.

13. Verfahren zum Drucken einer Vorform (100, 300, 400, 500, 600), um daraus lenkbare Fasern (200, 800) zu ziehen, wobei das Verfahren den folgenden Schritt umfasst:
Formen einer Vorform aus mindestens einem ersten Material (306), so dass ein oder mehrere hohle Abschnitte (308, 611, 613) in die Vorform eingeformt werden, wobei:
das erste Material ein Polymermaterial ist;
der eine oder die mehreren hohlen Abschnitte für eine ungleichmäßige Struktur der Vorform in Längsrichtung sorgen;
der eine oder die mehreren hohlen Abschnitte jeweils ein Durchgangsloch, eine Aussparung, eine Durchmesseränderung oder einen Hohlraum innerhalb der Vorform umfassen;
der Schritt des Bildens der Vorform das Bilden einer Vorform umfasst, die eine Vielzahl sich wiederholender Einheitszellen (700) entlang der Längslänge der Vorform umfasst, wobei jede Einheitszelle der Vielzahl von Einheitszellen entlang ihrer Längsrichtung ungleichmäßig ist; und
der Schritt des Bildens der Vorform das Bilden der Vorform umfasst, um sie zu einer Faser ziehen zu können, die mindestens einen lenkbaren Abschnitt umfasst, wobei der Abschnitt lenkbar ist, weil seine Bestandteile eine geeignete Flexibilität bieten und/oder über ein Mittel zum Lenken der Faser verfügen.

14. Verfahren nach Anspruch 13, wobei das Verfahren ferner das Formen der Vorform (100, 300, 400, 500, 600) aus einem zweiten Material (307) umfasst, so dass die Anordnung des ersten und zweiten Materials (306, 307) für die ungleichmäßige Struktur der Vorform in Längsrichtung sorgt.

15. Verfahren nach einem der Ansprüche 13 bis 14, wobei der Schritt des Formens der Vorform (100, 300, 400, 500, 600) Folgendes umfasst:
Bereitstellen einer Druckoberfläche; und
Drucken der Vorform auf der Druckoberfläche durch Aufbringen des mindestens ersten Materials (306), so dass die Vorform in Längsrichtung eine ungleichmäßige Struktur aufweist.

## Revendications

1. Préforme (100, 300, 400, 500, 600) destinée à l'étirage de fibres orientables (200, 800), la préforme étant constituée d'au moins un premier matériau (306) et présentant une structure non uniforme dans la direction longitudinale, dans laquelle :
le premier matériau est un matériau polymère ;
la préforme comprend une ou plusieurs parties creuses (308, 611, 613) agencées dans la préforme de telle sorte que la préforme est non uniforme dans la direction longitudinale ;
les une ou plusieurs parties creuses comprennent chacune un trou traversant, un évidement, un changement de diamètre ou un vide à l'intérieur de la préforme ;
la structure de la préforme comprend une pluralité de cellules unitaires répétitives (700) sur toute sa longueur longitudinale ;
chaque cellule unitaire de la pluralité de cellules unitaires est non uniforme le long de sa direction longitudinale ; et
une fibre étirée de la préforme comprend au moins une partie orientable, laquelle partie est orientable grâce à ses matériaux constitutifs offrant une flexibilité appropriée et/ou comportant un moyen de direction de la fibre.

2. Préforme (100, 300, 400, 500, 600) selon la revendication 1, dans laquelle l'une ou plusieurs des parties creuses (308, 611, 613) soit :
sont enfermées par la préforme ; soit
se prolongent au moins partiellement sur au moins une surface de la préforme.

3. Préforme (100, 300, 400, 500, 600) selon la revendication 2, dans laquelle l'une ou plusieurs des parties creuses (308, 611, 613) comprennent :
un trou traversant se prolongeant d'une première surface de la préforme à une seconde surface de la préforme.

4. Préforme (100, 300, 400, 500, 600) selon la revendication 2, dans laquelle l'une ou plusieurs des parties creuses (308, 611, 613) comprennent un canal hélicoïdal.

5. Préforme (100, 300, 400, 500, 600) selon une quelconque revendication précédente, dans laquelle la largeur radiale de la préforme varie le long de la direction longitudinale.

6. Préforme (100, 300, 400, 500, 600) selon une quelconque revendication précédente, comprenant un deuxième matériau (307) différent du premier matériau (306) et dans laquelle l'agencement du premier matériau et du deuxième matériau contribue à la structure non uniforme de la préforme dans la direction longitudinale.

7. Préforme (100, 300, 400, 500, 600) selon la revendication 6, dans laquelle le deuxième matériau (307) est agencé de manière hélicoïdale à l'intérieur du premier matériau (306).

8. Préforme (100, 300, 400, 500, 600) selon la revendication 6 ou la revendication 7, dans laquelle l'un des premier (306) et deuxième matériaux (307) comprennent un matériau magnétique qui est mobile à l'aide des variations de champ magnétique.

9. Préforme (100, 300, 400, 500, 600) selon l'une quelconque des revendications 6 à 8, dans laquelle la préforme comprend également un troisième matériau différent des premier (306) ou deuxième matériaux (307), l'agencement des premier, deuxième et troisième matériaux étant tel que la préforme comprend une structure non uniforme le long de la direction longitudinale.

10. Préforme (100, 300, 400, 500, 600) selon la revendication 9, dans laquelle au moins l'un des premier (306), deuxième (307) ou troisième matériaux comprend l'un d'un polymère ferromagnétique ; d'un polycarbonate ; d'un poly(méthacrylate de méthyle) (PMMA) ; d'un polyétherimide ; d'un copolymère d'oléfine cyclique (COC) ; d'un poly(styrène-bloc-butadiène-bloc-styrène) (SEBS) ; d'un élastomère copolymère d'oléfine cyclique (COC-E) et d'une polysulfone.

11. Préforme (100, 300, 400, 500, 600) selon la revendication 9, dans laquelle au moins l'un des premier (306), deuxième (307) ou troisième matériaux comprend l'un d'un matériau conducteur et d'un polymère chargé de matériau conducteur, dans laquelle le matériau conducteur comprend l'un ou plusieurs du carbone ; des nanotubes de carbone ; du graphène ; et des nanofils d'argent.

12. Préforme (100, 300, 400, 500, 600) selon une quelconque revendication précédente, dans laquelle la préforme est une préforme imprimée en 3D.

13. Procédé d'impression d'une préforme (100, 300, 400, 500, 600) destinée à l'étirage de fibres orientables (200, 800), le procédé comprenant l'étape :
de formation d'une préforme à partir d'au moins un premier matériau (306) de telle sorte qu'une ou plusieurs parties creuses (308, 611, 613) soient formées dans la préforme, dans lequel :
le premier matériau est un matériau polymère ;
les une ou plusieurs parties creuses assurent une structure non uniforme de la préforme dans la direction longitudinale ;
les une ou plusieurs parties creuses comprennent chacune un trou traversant, un évidement, un changement de diamètre ou un vide à l'intérieur de la préforme ;
l'étape de formation de la préforme comprend la formation d'une préforme comprenant une pluralité de cellules unitaires répétitives (700) le long de la longueur longitudinale de la préforme, chaque cellule unitaire de la pluralité de cellules unitaires étant non uniforme le long de sa direction longitudinale ; et
l'étape de formation de la préforme comprend la formation de la préforme pour qu'elle soit étirable en une fibre comprenant au moins une partie orientable, laquelle partie est orientable grâce à ses matériaux constitutifs offrant une flexibilité appropriée et/ou ayant un moyen de direction de la fibre.

14. Procédé selon la revendication 13, dans lequel le procédé comprend également la formation de la préforme (100, 300, 400, 500, 600) à partir d'un deuxième matériau (307) de telle sorte que l'agencement des premier et deuxième matériaux (306, 307) assure la structure non uniforme de la préforme dans la direction longitudinale.

15. Procédé selon l'une quelconque des revendications 13 et 14, dans lequel l'étape de formation de la préforme (100, 300, 400, 500, 600) comprend :
la fourniture d'une surface d'impression ; et
l'impression de la préforme sur la surface d'impression en déposant l'au moins un premier matériau (306) de telle sorte que la préforme comprenne une structure non uniforme dans la direction longitudinale.
